# EUROPEAN PATENT APPLICATION

(11) **EP 1 059 716 A1**
(43) Date of publication of application: **13.12.2000**
(21) Application number: 00304731.3
(22) Date of filing: 05.06.2000
(51) Int. Cl.: H02G 3/06

(54) **Lip threaded lock nut for electrical conduit**

(30) Priority: 07.06.1999 US 137961 P
(71) Applicant: Sheehan, Robert K., Cincinnati, Ohio 45242 (US)
(72) Inventor: Sheehan, Robert K., Cincinnati, Ohio 45242 (US)
(74) Representative: Selby-Lowndes, Guy Francis Charles

(57) **Abstract**

The lock nut (10) is insertable with a conduit (11) into a junction box (14) through a knock out (13). The lock nut (10) comprises a continuous circular band having front and rear openings, the front opening having a single, internally formed lip thread (15), compatible with the threaded conduit (11), and the rear opening having a plurality of tabs (22) positioned along the perimeter of the opening. The tabs (22) are compressible to permit insertion of the lock nut (10) and the conduit (11) into the junction box (14) and outwardly biased to prevent easy removal without loosening and removing the lock nut (10). Preferably there are a plurality of tabs (26) extending generally axially from the perimeter of the rear opening and the internally formed lip thread (15) is less than 360 degrees.

## Description

**Background of the Invention**: This disclosure relates generally to a novel lock nut having a variety of features to assist in the installation of threaded conduit connectors. Specifically, this new lock nut will facilitate the attachment of a threaded conduit connector to a junction box, and it will accomplish this attachment with a minimal amount of thread, and deflecting and centering tabs on its periphery.

**Description of the Prior Art**: Typically, threaded conduit connectors are inserted into a junction box by punching out knock-out holes in the panels of the box. The threaded end of the conduit connector is inserted into the box and a lock nut is threaded onto the male threaded end of the conduit. Because the installer is working with one hand on the conduit connector and the other hand in the junction box, securing the connection requires quite a bit of manual dexterity, is inherently dangerous and is time consuming. Some accommodations have been made in the connection process as can be seen in document WO 95/18482, published July 6, 1995, which is hereby incorporated by reference, wherein a multiple-threaded, snap-in lock nut adapter is shown and described.

Notwithstanding the availability of a pre-assembled lock nut and conduit connector combination, the lock nut and conduit connector combination herein disclosed presents additional features that improve upon the ease of use and enhance the security with which the conduit is attached to the junction box. Accordingly, the disclosed lock nut and conduit combination can be described as follows:

**Summary of the Invention**: Specifically, what has been developed is a single, lip-threaded lock nut in combination with a male threaded conduit connector. This combination facilitates attaching and securing electrical conduit or cable to a junction box or electrical panel having at least one knock-out as a port of entry. This secure attachment is facilitated by designing the lock nut to permit insertion of the nut and conduit connector into the junction box from the outside and effecting the tightening of the nut turning the conduit connector on the outside of the box.

Furthermore, and more specifically, the features of the lock nut include a body of a continuous circular band front and rear openings. The front opening is defined by the lip of an internal thread having less than 360° (single threaded), compatible with a male-threaded conduit connector, and the back opening is defined by a plurality of tabs positioned on the periphery of said back opening, said tabs featuring deformable portions.

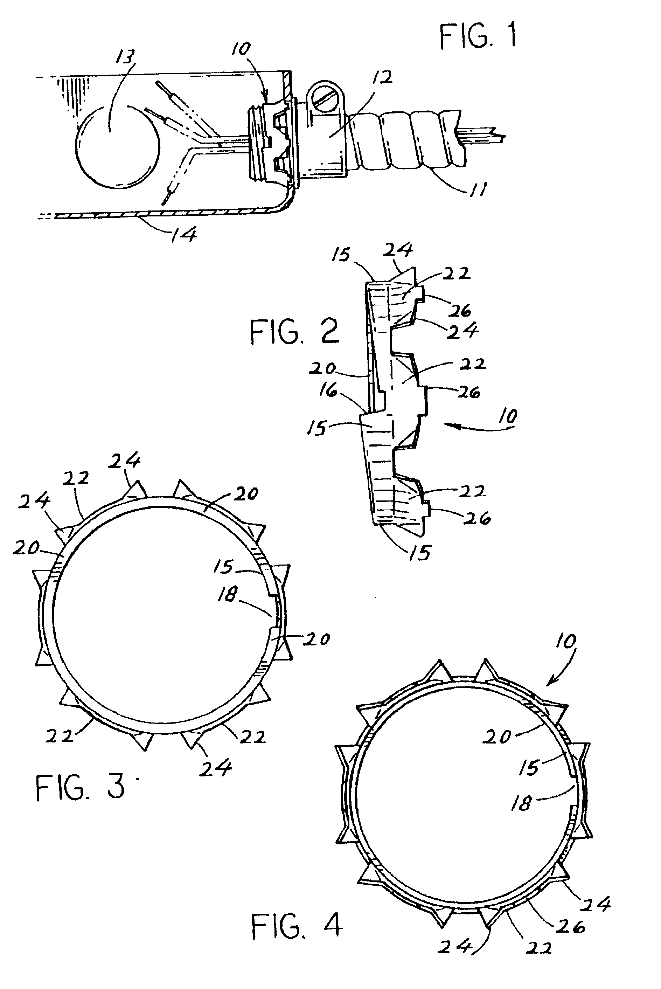

**Brief Description of the Drawing:** Figure 1 is an assembly view of the disclosed lock nut and an electrical conduit connector with a junction box in cross-section to reveal the association of the lock nut with the connector.
Figure 2 is an elevated side view of the lock nut.
Figure 3 is a top plan view of the lock nut; and
Figure 4 is a bottom plan view of the lock nut.

**Description of the Preferred Embodiments:** This disclosure relates specifically to an improved lock nut for securing threaded conduit connectors to a junction box. These improvements include a lip thread on the perimeter of the front opening of the nut and a plurality of tabs on the perimeter of the rear or back opening of the lock nut, said tabs having resilient tabs to permit entry of the nut and conduit into the junction box and extended wedging tabs to assist in centering and securing the lock nut and conduit connector to the junction box.

For enhanced understand of the disclosed lock nut, reference should be made to the drawing. Figure 1 presents an assembly view of the disclosed nut 10 used in combination with a cable connector 12 to secure electrical conduit or cable 11 to a junction box 14. In this instance the junction box is shown in cross-section to more clearly depict how the lock nut is threadably attached to the conduit connector and secures itself and the connector (along with the electrical cable) to interior of the junction box. It should be readily apparent that entrance to the interior of the junction box is gained through one of typically several knock-outs 13 that are routinely stamped into the sides or walls of junction boxes.

In figure 2, an elevated side view of the lock nut 10, all of the features and attributes of the lock nut are more readily apparent. The lock nut 10 can be described as having a front side and a back or rear side. In this instance, the front side is the left side of the nut 10 depicted in figure 2, and it is the front side that has the internal lip thread 15. This lip thread, formed on the perimeter of the front opening of the lock nut 10 ideally contains less than 360°. This single thread is necessary because in instances where the length of the male threaded conduit connector is minimal, a shorter, minimally threaded lock nut is required.

The origin of the lip thread 15 is the face 16, and the thread continues around the periphery of the circumference of the front opening of the lock nut 10 for almost a full 360° but it terminates short of the origin 16 with a gap 18 in the thread 15. It is the gap 18 and the face 16 that facilitate threading the nut onto the threaded conduit connector 12. Defining the exterior edge of the thread 15 is the lip 20. The lip, of course, defines the thread and aids in mating the thread with the male threads of the conduit connector.

Figure 2 also discloses the tabs 22 that extend from the rear or back opening of the nut 10. Of course, in this instance, the rear or back opening of the nut is on the right side of figure 2. The tabs 22 have additional tabs that are designed to perform specific duties in securing the electrical conduit connectors to junction boxes. In particular, a flared and lateral extension of tab 22 is tab 24. Tab 24 is resilient and deflects toward the center of the nut to permit insertion of the nut, especially when threadably attached to the conduit connector 12, into the junction box 14. Typically each tab 22 will have a pair of resilient tabs 24.

Further examination of figure 2 reveals an additional tab 26 that will extend axially from tab 24. In rise, tab 26 will extend to fit into and wedge itself in the knock-out as the lock nut 10 is threaded or tightened onto the conduit connector. In addition to securing the lock nut to the conduit connector and junction box by wedging, tab 26 also serves to "reach out" into the knock-out hole during tightening to center the conduit connector and the attached cable in the junction box for a tight and true connection.

Figure 3 is a top plan view of the lock nut 10 looking down on the front opening of the nut as depicted on the left side of figure 2. This view is particularly useful to depict the thread 15, its lip 20, its gap 18 and the flared, resilient tabs 24 on tabs 22. It is these flared resilient tabs that will deflect toward the center of the nut 10 to permit insertion into the junction box 14 through the knock outs 13. And, as tabs 24 deflect to permit entry of the nut into the junction box, the tabs 24 will offer resistance that discourages easy removal of the nut and conduit connector from the junction box without removing the nut.

Figure 4 is a bottom plan view of the lock nut 10. It is also the view afforded by looking at the nut from the right side of figure 2. This view reveals tabs 26, which are typically positioned between paired tabs 24 on tab 22. Tabs 26 are intended to enter partially into the knock-out hole in the junction box as the nut 10 is tightened on the threaded conduit connector, and wedge against the inside opening of the knock-out. These tabs 26 significantly increase the holding strength of the lock nut and facilitate tightening the nut onto the conduit connector and against the junction box by simply turning the conduit connector outside the box. Tightening, without having to grasp the nut on the inside of the box is easier, quicker and safer than manipulating a wrench or pliers inside the box.

Furthermore, as the relationship among the conduit connector, the lock nut and the junction box is tightened, the extended centering tabs 26 are caught or trapped on the internal perimeter of the knock-out hole as the resilient tabs 24 are pulled tight against the interior side of the box. The extended wedging tabs 26 work best if they are bent at a slight angle (about 10° or so) outwardly or away from a true axial extension from the perimeter from which they extend.

The disclosed lock nut can be made of plastic or metal. If made of metal, a medium to high carbon stamped galvanized steel is preferred. This type of steel can be heat treated to a spring temper which strengthens its memory or resilient quality so that after it passes through the knock-out hole, it returns to its original configuration.

While the foregoing is a complete and detailed description of preferred embodiments of the disclosed lock nut, numerous variations and modifications may be employed to implement the all important purpose of the invention without departing from the spirit of the invention; and, therefore, the elaboration provided should not be assumed to limit in any way the scope of the invention which is fairly defined by the appended claims.

## Claims

1. A lip threaded lock nut (10) useful for securing threaded electrical conduit (11) to a junction box (14) having at least one knock-out (13), said lock nut (10) insertable with said conduit (11) into said junction box (14) through said knock out (13), characterised in that said lock nut (10) comprises a continuous circular band having front and rear openings, said front opening having a single, internally formed lip thread (15), compatible with said threaded conduit (11), and said rear opening having a plurality of tabs (22) positioned along the perimeter of said opening, said tabs (22) compressible to permit insertion of said lock nut (10) and said conduit (11) into said junction box (14) and biased to prevent easy removal without loosening and removing said lock nut (10).

2. The lock nut (10) according to claim 1, characterised in that it further includes a plurality of extended tabs (26) extending generally axially from the perimeter of the rear opening.

3. The lock nut (10) according to claim 1, characterised in that the internally formed lip thread (15) is less than 360 degrees.

4. The lip threaded lock nut (10) according to claim 1 in combination with a male threaded conduit (11).
